# EUROPÄISCHE PATENTSCHRIFT

(11) **EP 2 588 336 B1**
(45) Veröffentlichungstag und Bekanntmachung des Hinweises auf die Patenterteilung: **29.10.2014**
(21) Anmeldenummer: 11787576.5
(22) Anmeldetag: 30.06.2011
(51) Int. Cl.: B60K 1/04

(54) **VERFAHREN ZUM BETRIEB EINES FAHRZEUGS**
OPERATING METHOD FOR A VEHICLE
PROCÉDÉ DE FONCTIONNEMENT POUR UN VEHICULE

(30) Priorität: 01.07.2010 DE 102010025817
(43) Veröffentlichungstag der Anmeldung: 08.05.2013
(73) Patentinhaber: GPI Gesellschaft Für Prüfstanduntersuchungen und Ingenieurdienstleistungen MbH, 08115 Lichtentanne OT Stenn (DE)
(72) Erfinder: MEHNERT, Jens, 08468 Heinsdorfergrund (DE)
(74) Vertreter: Steiniger, Carmen
(86) Internationale Anmeldenummer: PCT/DE2011/001449
(87) Internationale Veröffentlichungsnummer: WO 2012/022290

(56) Entgegenhaltungen:
- EP-A1- 0 588 004
- EP-A2- 2 141 763
- WO-A1-95/15014
- DE-A1-102007 050 812
- FR-A1- 2 748 858

## Beschreibung

Die Erfindung beschreibt ein System und ein Verfahren zum Betrieb eines Fahrzeugs oder Fahrzeuganhängers nach dem Oberbegriff des Anspruchs 1.

Dem Fachmann auf dem Gebiet von Energiespeichereinrichtungen ist bekannt, dass zur Gewährleistung einer hohen Lebensdauer mit maximal möglichen Entladungszyklen des Energiespeichers eine auf das jeweils eingesetzte Energiespeichermedium abgestellte Betriebstemperatur vorteilhaft ist. Dies kann jedoch derzeit nicht in ausreichendem Maß durch im Technikstand ausgewiesene Verkleidungsanordnungen sichergestellt werden.

In DE 10 2009 034 223 A1 wird ein Fahrzeug, insbesondere Elektrofahrzeug oder Hybridfahrzeug beschrieben, welches in einer verbesserten Weise eine Alternative für herkömmliche Zuheizsysteme bietet. Die Umsetzung erfolgt vorzugsweise durch eine speziell ausgeführte Heizeinrichtung mit einem Reaktionsraum für einen exothermen, insbesondere einen Katalysator nutzenden, chemischen Reaktionsprozess.

In DIE 198 28 601 C1 wird eine Bodenverdichtungsvorrichtung mit schwingungsisolierender Halterung für eine Starterbatterie offenbart. Es liegt dabei die Aufgabe zugrunde, eine Bodenverdichtungsvorrichtung anzugeben, bei der ein übermäßig starkes Einwirken von Beschleunigungsbelastungen auf eine Starterbatterie vermieden wird, ohne dass ein großer baulicher Aufwand erforderlich ist. Die Aufgabe wird mit einer an einer Oberseite der Bodenverdichtungsvorrichtung vorgesehenen Aufnahme, einem in die Aufnahme einsetzbaren Käfig zum Halten der Batterie, einem zwischen wenigstens einer Außenseite des Käfgs und wenigstens einer Innenseite der Aufnahme ausgebildeten Spalt, und mit wenigstens einem in dem Spalt angeordneten Feder-Dämpferelement das nicht an der Aufnahme befestigt ist, gelöst.

In DE 102 47 968 B4 wird eine kastenförmige Aufnahme für die Batterie oder den Batterietrog in einem Flurförderfahrzeug offenbart. Aufgabe ist es, eine wenig aufwändige kastenförmige Aufnahme für die Batterie oder den Batterietrog eines Fiurförderfahrzeuges zu schaffen, bei der eine Arretierung beim Einsetzen der Batterie automatisch erfolgt, ohne die Nachteile der bekannten Arretierungen in Kauf nehmen zu müssen. Die Aufgabe wird dadurch gelöst, dass im Aufnahmeraum der kastenförmigen Aufnahme nach innen vorstehende Mittel an den Innenwänden und/oder an der Außenseite des Batterietroges angebracht sind, die beim Einsetzen eine erzwungene Positionierung der Batterien in der Art bewirken, dass diagonal gegenüberliegende vertikale Kanten der Batterie mit der Innenwand zur Anlage gebracht werden.

Es ist Aufgabe der vorliegenden Erfindung ein System der oben gannten Gattung mit einer vorteilhaften Energiespeicherverkleidung anzugeben und ein Verfahren zum Betrieb eines Fahrzeugs oder Fahrzeuganhängers mit einem solchen System zu beschreiben.

Diese Aufgabe wird durch ein System gemäß den Merkmalen des Patentanspruchs 1 und einem Verfahren gemäß Anspruch 11 gelöst Weiterhin sind vorteilhafte Ausführungen Gegenstand der Unteransprüche.

Eine Energiespeicherverkleidung für ein Fahrzeug oder einen Fahrzeuganhänger, wobei mindestens eine Antriebseinrichtung und/oder Arbeitseinrichtung vorhanden ist sowie mindestens ein fahrzeug- und/oder anhängerseitig befestigter Hauptenergiespeicher existiert und wenigstens eine Steuereinheit den Energieaustausch entsprechend der jeweils vorliegenden Lastanforderung zwischen der Antriebseinrichtung und/oder Arbeitseinrichtung und dem Hauptenergiespeicher einstellt wird dadurch gekennzeichnet, dass eine Energiespeicherverkieidung an wenigstens einer Fläche ein Verkleidungselement aus mindestens drei Schichten aufweist. Die Kombination der einzelnen Schichten eines Vorkleidungselementes richtet sich nach den jeweils definierten Anforderungen an die Verkleidungsgestaltung eines Energiespeichers.

In einer weiterführenden Ausführung weist das Fahrzeug oder der Fahrzeuganhänger eine als Hauptenergiespeicher bezeichnete Einrichtung zur Energieversorgung der Antriebs- oder Arbeitseinrichtung sowie eine als Zusatzenergiespeicher bezeichnete Einrichtung zur Temperierung eines Medienstromes auf.

Der vorteilhafte und umfängliche Schichtaufbau der Energiespeicherverkleidung weist folgende, voneinander unabhängig kombinierbaren, Schichten auf.

Eine Schutzschicht dient zur Verhinderung oder Verminderung von nicht bestimmungsgemaß auf den Energiespeicher einwirkenden Gegenständen, vorzugsweise von außen, jedoch auch als Austrittsschutz für innenliegende Gegenstände, welche bspw. bei einem Unfall zurückgehalten werden. Sie wird in Form eines als Gewebe oder Gelege ausgebildeten Faserverbundwerkstoffes, bspw. auf Aramid-Basis, bereitgestellt und nutzt allgemein Kunstfasern mit einer hohen Festigkeit zur Absicherung der definierten Funktion.

Eine Zwischenschicht dient zur Temperaturisolierung des Energiespeichers in Bezug auf einen minimierten Wärmeaustausch mit der Umgebung und besteht bspw. aus expandiertem Polystyrol oder extrudiertem Polystyrol.

Eine Funktionsschicht gewährleistet die Bereitstellung eines nach innen gerichteten Temperierungselernentes zur Sicherung eines definierten Arbeitstemperaturbereiches des jeweiligen Energiespeichers, wobei die Art und Weise der Ausführung sich auf die erforderlichen Temperierungsanforderungen des Energiespeichers abstellt, weshalb ein offen- oder geschlossenporiger Metallschaum und/oder ein Trägermaterial, wie Kunststoff oder ein textiler Werkstoff, mit eingebrachtem Phasenwechselmaterial oder Phasenwechselfluid, aber auch Heizschlangen- oder Plattenwärmetauscher sowie Kombinationen aus diesen genannten Elementen einsetzbar sind.

Eine alternative Ausführungsform ist dadurch gekennzeichnet, dass die Funktionsschicht eine Materialkombination aufweist, wie Metallschaum mit einer aufgebrachten Folie ausgebildeten Faserverbundwerkstoffes und/oder ein mit einem Phasenwechselmaterial oder Phasenwechselfluid infiltrierten Metallschaum und/oder in den Faserverbundwerkstoff oder zwischen zwei Platten aus Metall oder Kunststoff eingearbeitetes adsorptives oder absorptives Material.

In einer anderen vorteilhaften Ausführungsform sind die für einen Energiespeicher erforderlichen Schichten in Form einer Sandwichbauweise zusammengefügt und/oder weisen an den Rändern wechselseitig angebrachte Verbindungsstellen auf, die bspw. als Nut-Feder-Element gestaltet sind.

In einer anderen vorteilhaften Ausgestaltung ist die Funktionsschicht in einen Temperierungskreislauf eingebunden, dessen Temperatur von einer Steuereinheit derart konditioniert wird, dass der in der Steuereinheit gespeicherte Arbeitstemperaturbereich des Energiespeichers eingehalten wird. In diesem Zusammenhang weist der Energiespeicher und/oder die Innen- oder Dichtungsschicht wenigstens einen Temperaturfühler, beispielsweise einen Platinsensor Pt100, auf, welcher mit der Steuereinheit in Verbindung steht und kontinuierlich die Temperatur des Energiespeichers ermittelt und an die Steuereinheit überträgt. Die Steuereinheit ist weiterhin mit einer Einrichtung zur Durchflussmengenregulation eines Temperierungskreislaufs, beispielsweise mit Hilfe eines Thermostatventils, verbunden, weich die der Funktionsschicht zugeführte Durchflussmenge und/oder Zuführungstemperatur in Abhängigkeit der Signalvorgabe der Steuereinheit regelt.

In einer anderen Ausführungsform weist die zur Innenseite des Energiespeichers hin gerichtete Fläche der Funktionsschicht ein gut wärmeleitendes Material, wie Tupfer, auf. Auf der nach außen gerichteten Seite ist dabei eine Wärmetauscheinrichtung in Form eines Rohrsystems und/oder eines Labyrinthsystems oder ähnliches aufgebracht, das mit einer Einrichtung zur Wärmespeicherung und/oder Wärmeumwandlung, wie einem Latentwärmespeicher, verbunden ist. Es kann sich auch als vorteilhaft erweisen, wenn die Zwischenräume dieser Wärmetauscheinrichtung mit einem Material zur latenten Wärmespeicherung ausgekleidet sind.

Bei einer weiteren Ausführungsform ist die Steuereinheit mit einer Prognoseeinrichtung für den zu erwartenden Außentemperaturverlauf verbunden. Diese Verbindung kann beispielsweise mittels Internet zu einem Portal mit zu erwartenden Außenlemperaturverläufen für einen zukünftiger Nutzungszeitraum gestaltet sein. Aus dem Abgleich zwischen ermitkeltem Pragnasetemperaturverlaufi und Betriebstemperaturbereich des Energierspeichers ermittelt die Steuereinheit das mit Hilfe einer externen Energiequelle einzustellende Temperaturniveau der Funktionsschicht und/oder des Wärmetauschers und/oder eines zusätzlichen Energiespeichers. Dafür wird bspw. über ein Ventil ein extern anliegender Wärmestrom zur Temperierung an das Wärmeleitsystem der Funktionsschicht angeschlossen.

Bei einem Verfahren zum Betrieb einer Energiespeicherverkleidung für ein Fahrzeug oder einen Fahrzeuganhänger, ist in der Steuereinheit der Betriebstemperaturbereich mit einem bevorzugten Soll-Temperaturwert für mindestens einen Hauptenergiespeicher gespeichert und die Funktionsschicht der Energiespeicherverkleidung besitzt an der Innenseite eine Einrichtung zur Temperierung, wobei das darin befindliche Temperierungsmittel hinsichtlich Zuführungstemperatur und/oder Volumenstrom von der Steuereinheit in Abhängigkeit der jeweils ermittelten IstTemperatur eines Energiespeichers auf eine durch die Steuereinheit vorgegebene Solltemperatur eingestellt wird, indem bspw. mit Hilfe eines Ventils die Durchflußmenge und/oder die Temperatur des Temperierungsmediums eingestellt wird.

In einer vorteilhaften Verfahrensumsetzung sind in der Steuereinheit an unterschiedliche Betriebsarten angepasste Regelregime hinterlegt. Diese Betriebsarten können je nach Randbedingungen und Ausführungsart der Verkleidung des Hauptenergiespeichers einzeln oder gesamt oder in Kombination von der Steuereinheit geschaltet werden.

Im Rahmen des Integrationsregimes wird die von einer Antriebseinrichtung und/oder Arbeitseinrichtung abgeführte Energie zur Temperierung der Wärmetauscheinrichtung an der Innenseite eines Energiespeichers in der Art genutzt, dass bei Unterschreiten einer in der Steuereinheit abgelegten Minimaltemperatur des Energiespeichers die Steuereinheit ein Ventil ansteuert, welches daraufhin die Energiezufuhr von der Antriebseinrichtung und/oder Arbeitseinrichtung zur Temperierungseinrichtung des Energiespeichers öffnet und bei eingestellter Betriebstemperatur wieder schließt.

Im Rahmen des Zuheizregimes wird eine fahrzeugseitig befestigte zusätzliche Einrichtung zur Wärmeerzeugung durch die Steuereinheit mit Hilfe eines ansteuerbaren Ventils in den Temperierungskreislauf eingebunden und aktiviert, wenn die ermittelte Temperatur eines Energiespeichers unter eine in der Steuereinheit abgelegte Mindesttemperatur sinkt und wieder deaktiviert, wenn die Betriebstemperatur des Energiespeichers erreicht ist.

Im Rahmen des Kühlregimes wird eine fahrzeugseitig befestigte zusätzliche Einrichtung zur Kühlung durch die Steuereinheit mit Hilfe eines ansteuerbaren Ventils in den Temperierungskreislauf eingebunden und aktiviert, wenn die ermittelte Temperatur eines Energiespeichers über eine in der Steuereinheit abgelegte Maximaltemperatur steigt und wieder deaktiviert, wenn die Betriebstemperatur des Energiespeichers erreicht ist.

Das Beharrungsregime ist dadurch gekennzeichnet, dass ein Fahrzeug oder ein Fahrzeuganhänger wenigstens einen Zusatzenergiespeicher aufweist, welcher in den Temperierungskreislauf eines Hauptenergiespeichers eingebunden ist. Die Steuereinheit überprüft vor einer Aktivierung einer zusätzlichen Einrichtung zur Wärmeerzeugung oder Kühlung, ob die im Zusatzenergiespeicher abrufbare Energie ausreicht, die Maximal- oder Minimaltemperatur eines Hauptenergiespeichers einzustellen.

Das Autonomregime nutzt den Hauptenergiespeicher als Energielieferant zur Temperierung des Temperierungskreislaufes in der Art, dass bei einem durch die Steuereinheit ermittelten Temperierungsbedarfs eines Hauptenergiespeichers das darin befindliche Energieträgermedium als Energiequelle für eine Temperierungseinrichtung bereitgestellt wird und/oder die dadurch eintretende Verminderung an möglicher Fahrstrecke und/oder Betriebsstunden durch die Steuereinheit mit Hilfe einer Volumenstromüberwachung ermittelt und/oder im Gegenzug die Reichweitenerhöhung oder Betriebsstundenzunahme durch Temperierung des Hauptenergiespeichers durch die Steuereinheit bestimmt und diese Parameter zur Anzeige gebracht werden. Die Ermittlung der Reichweitenerhöhung oder Betriebsstundenzunahme erfolgt durch die Steuereinheit in der Art, dass für Referenzbetriebstemperaturen Kapazitätsäquivalente hinterlegt sind. Durch Gegenüberstellung des auf der Basis der Ist-Energiespeichertemperatur und einer bevorzugten Soll-Energiespeichertemperatur ermittelten Kapazitätsäquivalentes wird die sich einstellende Änderung der Reichweite oder der Betriebsstunden bestimmt.

In einer weiteren Verfahrensausführung erfolgt im Rahmen des Autonomregimes die Ausgabe des durch die Steuereinheit gebildeten Differenzwertes zwischen zu erwartender Verminderung an möglicher Fahrstrecke und/oder Betriebsstunden und prognostizierter Reichweitenerhöhung oder Betriebsstundenzunahme durch Temperierung des Hauptenergiespeichers.

Das Kopplungsregime ist dadurch gekennzeichnet, dass die Steuereinheit mit einer Prognoseeinrichtung für den zu erwartenden Temperaturverlauf, wie einem über das Internet abgerufenen Außentemperaturverlauf, für einen durch den Bediener vorgebbaren Zeithorizont in Verbindung steht und für einen Nutzungszeitraum von größer 15 Minuten die einzustellende Temperatur des Temperierungsmediums für einen Hauptenergiespeicher bestimmt und daraus der Energiebedarf mindestens eines Zusatzenergiespeichers ermittelt wird, damit ohne Unterstützung einer im Fahrzeug oder Fahrzeuganhänger befindlichen zusätzlichen Energiequelle das Temperaturniveau zwischen Minimal- und Maximaltemperatur für einen maximalen Nutzungszeitraum für das Temperierungsmedium eines Hauptenergiespeichers mit Hilfe einer fahrzeugexternen Energiequelle eingestellt werden kann. Die Steuereinheit regelt mit Hilfe eines schaltbaren Ventils die Energiezufuhr der externen Energiequelle entsprechend der einzustellenden Betriebstemperatur des Energiespeichers.

Eine weiterführende Verfahrensausführung wird durch das Temperierungsregime bei außer Betrieb gesetztem Fahrzeug oder Fahrzeuganhänger dargestellt, indem der Nutzer der Steuereinheit eine Temperierungsvorgabe bereitstellt und diese bei Verlassen des in der Steuereinheit gespeicherten Temperaturbereiches zwischen minimaler und maximaler Betriebstemperatur des Energiespeichers vorzugsweise das Kopplungsregime oder das Autonomregimes oder das Beharrungsregime aktiviert.

Die Erfindung wird nachfolgend anhand der folgenden Figur näher erläutert.

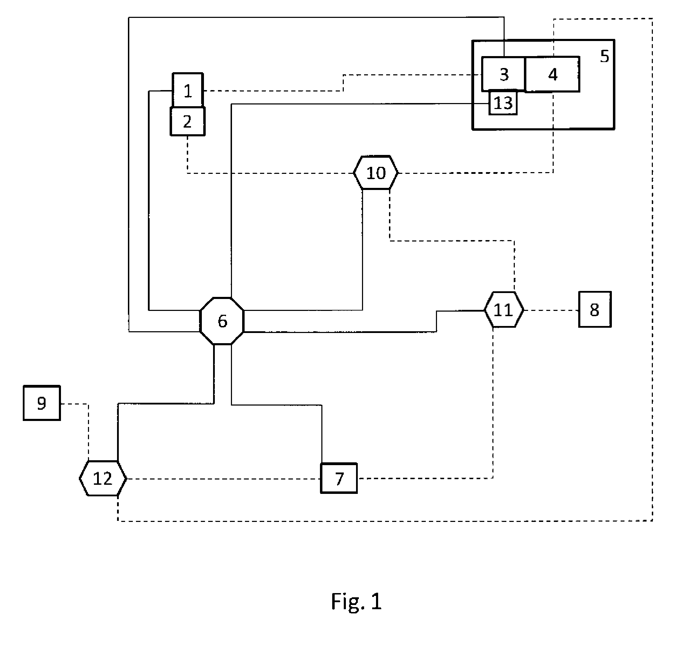

Figur 1 zeigt ein erstes schematisches Ausführungsbeispiel einer erfindungsgemäßen Energiespeicherverkleidung eingebunden in Systemglieder einer beispielhaften Verfahrensanordnung. Die durchgehenden Verbindungslinien symbolisieren Signalleitungen, während die gestrichelten Linien Medienleitungen abbildern. Die Antriebs- oder Arbeitseinheit 1 ist mit Hilfe einer Signalleitung mit der Steuereinheit 6 verbunden. Außerdem besitzt die Antriebs- oder Arbeitseinheit 1 eine Temperierungseinheit 2, welche über eine Medienleitung mit dem Drei-Wege-Ventil A 10 in Verbindung steht. Die Antriebs- oder Arbeitseinheit 1 ist mit einer Medienleitung mit dem Hauptenergiespeicher 3 verbunden. Der Hauptenergiespeicher 3 besitzt eine Signalleitung zur Steuereinheit 6. Am Hauptenergiespeicher 3 befindet sich eine Funktionsschicht der Energiespeicherverkleidung 4, welche über Medienleitungen mit dem Drei-Wege-Ventil A 10 und dem Drei-Wege-Ventil C 12 in Verbindung steht. Der Hauptenergiespeicher 3 und die Funktionsschicht der Energiespeicherverkleidung 4 werden von der Außen- oder Tragschicht der Energiespeicherverkleidung 5 eingeschlossen. Das Drei-Wege-Ventil A 10 ist durch eine Signalleitung mit der Steuereinheit 6 und außerdem mit Hilfe einer Medienleitung mit dem Drei-Wege-Ventil B 11 verbunden. Das Drei-Wege-Ventil B 11 ist durch eine Signalleitung mit der Steuereinheit 6 und außerdem mit Hilfe einer ersten Medienleitung mit dem Wärmetauscher 8 und durch eine zweite Medienleitung mit dem Zusatzenergiespeicher 7 verbunden. Der Zusatzenergiespeicher 7 ist mit Hilfe einer Signalleitung mit der Steuereinheit 6 und einer weiteren Medienleitung mit dem Drei-Wege-Ventil C 12 verbunden. Das Drei-Wege-Ventil C 12 ist durch eine Signalleitung mit der Steuereinheit 6 und einer Medienleitung mit einer externen Energiequelle 9 verbunden. Die Steuereinheit 6 ist über eine Signalleitung mit dem Temperaturfühler 13 des Hauptenergiespeichers 3 verbunden.

In einem erfindungsgemäßen Verfahren zum Betrieb einer Energiespeicherverkleidung für ein Fahrzeug oder einen Fahrzeuganhänger ist in der Steuereinheit 6 der Betriebstemperaturbereich von 15 Grad Celsius bis 30 Grad Celsius mit einem bevorzugten Soll-Temperaturwert von 23 Grad Celsius für einen als Lithium-Ionen-Batterie ausgestalteten Hauptenergiespeicher 3 gespeichert. Die Energiespeicherverkleidung weist einen Zwei-Schicht-Aufbau auf. Die Funktionsschicht 4 der Energiespeicherverkleidung besitzt an der Innenseite eine Einrichtung zur Temperierung, welche als Flächenwärmetauscherelement aus Messing ausgeführt ist. Das darin befindliche Temperierungsmittel ist mit Glysantin versetztes Wasser und wird hinsichtlich Zuführungstemperatur des Volumenstroms von der Steuereinheit 6 in Abhängigkeit des jeweils durch den Temperatursensor 13 ermittelten Ist-Temperaturwertes eines Hauptenergiespeichers 3 auf eine durch die Steuereinheit 6 vorgegebene Soll-Temperatur von 23 Grad Celsius eingestellt, indem mit Hilfe des Drei-Wege-Ventils A 10 der Durchfluss des Temperierungsmediums freigegeben wird. Als Wärmequelle dient die Temperierungseinheit 2 der Antriebseinheit 1. Mit eingestelltem Soll-Temperaturwert von 23 Grad Celsius gibt die Steuereinheit 6 ein Signal zum Schließen des Durchgangs des Drei-Wege-Ventils A 10 aus.

**Bezugszeichenliste**

| Kurzzeichen | Beschreibung |
|---|---|
| 1 | Antriebs- oder Arbeitseinheit |
| 2 | Temperierungseinheit für die Antriebs- oder Arbeitseinheit |
| 3 | Hauptenergiespeicher |
| 4 | Funktionsschicht der Energiespeicherverkleidung |
| 5 | Außen- oder Tragschicht der Energiespeicherverkleidung |
| 6 | Steuereinheit |
| 7 | Zusatzenergiespeicher |
| 8 | Wärmetauscher |
| 9 | Externe Energiequelle |
| 10 | Drei-Wege-Ventil A |
| 11 | Drei-Wege-Ventil B |
| 12 | Drei-Wege-Ventil C |
| 13 | Temperatursensor des Hauptenergiespeichers |

## Patentansprüche

1. System zum Betrieb eines Fahrzeugs oder Fahrzeuganhängers mit mindestens einer Antriebseinrichtung und/oder Arbeitseinrichtung (1) sowie mindestens einem fahrzeug- und/oder anhängerseitig befestigten Hauptenergiespeicher (3) und
wenigstens einer Steuereinheit (6), die den Energieaustausch entsprechend der jeweilig vorliegenden Lastanforderung zwischen der Antriebseinrichtung und/oder Arbeitseinrichtung (1) und dem Hauptenergiespeicher (3) einstellt, wobei
der Hauptenergiespeicher (3) eine Energiespeicherverkleidung aufweist, welche an wenigstens einer Fläche ein Verkleidungselement aufweist,
**dadurch gekennzeichnet,**
**dass** die Energiespeicherverkleidung eine Außen- oder Tragschicht (5) aufweist, an deren Innenseite sich eine Funktionsschicht (4) aus einem offen- oder geschlossenporigen Metallschaum und/oder einem Trägermaterial mit eingebrachtem Phasenwechselmaterial oder Phasenwechselfluid und/oder einem Rohr-, Waben- oder Plattenwärmetauscher anschließt, wobei die Funktionsschicht (4) über wenigstens jeweils einen Anschluss zur Zuleitung und Ableitung eines Temperierungsmittels verfügt und wobei in diesen Leitungen wenigstens ein Ventil (10, 11, 12) zur Einstellung der Durchflussmenge des Temperierungsmittels eingebunden ist, welches mit der Steuereinheit (6) in Verbindung steht.

2. System nach Anspruch 1, **dadurch gekennzeichnet, dass** das Ventil (10) über eine Medienleitung mit einer Temperierungseinheit (2) der Antriebs- und/oder Arbeitseinrichtung (1) und über eine Medienleitung mit der Funktionsschicht (4) in Verbindung steht, sodass beim Öffnen des Ventils (10) der Temperierungskreislauf der Antriebseinrichtung und/oder Arbeitseinrichtung (1) und der Temperierungskreislauf der Funktionsschicht (4) verbunden werden.

3. System nach Anspruch 1 oder 2, **dadurch gekennzeichnet, dass** das Ventil (12) über jeweils eine Medienleitung mit einer externen Energiequelle (9) und/oder einem mit der Steuereinheit (6) verbundenen Zusatzenergiespeicher (7) verbunden ist.

4. System nach den Ansprüchen 2 und 3, **dadurch gekennzeichnet, dass** das Ventil (10) und der Zusatzenergiespeicher (7) über jeweils eine Medienleitung mit einem Ventil (11) verbunden sind, welches über eine Signalleitung mit der Steuereinheit (6) und über eine Medienleitung mit einem Wärmetauscher (8) verbunden ist.

5. System nach wenigstens einem der vorhergehenden Ansprüche, **dadurch gekennzeichnet, dass** die Funktionsschicht (4) eine Materialkombination, die Metallschaum mit einer aufgebrachten Folie aus Faserverbundwerkstoff und/oder ein mit einem Phasenwechselmaterial oder Phasenwechselfluid getränkter Metallschaum und/oder ein in den Faserverbundwerkstoff oder zwischen zwei Platten aus Metall oder Kunststoff eingebundenes adsorptives oder absorptives Material, aufweist und/oder ein Rohrsystem und/oder ein Labyrinthsystem aufgebracht ist, das mit einer Einrichtung zur Wärmespeicherung und/oder Wärmeumwandlung in Verbindung steht und/oder Zwischenräume der Funktionsschicht (4) mit einem Material zur latenten Wärmespeicherung ausgekleidet sind.

6. System nach wenigstens einem der vorhergehenden Ansprüche, **dadurch gekennzeichnet, dass** die Funktionsschicht (4) in einen Temperierungskreislauf eingebunden ist, dessen Temperatur die Steuereinheit (6) konditioniert, welche mit einem Temperaturfühler (13) in Verbindung steht, welcher kontinuierlich die Temperatur des Hauptenergiespeichers (3) ermittelt, und die Steuereinheit (6) weiterhin mit einer Einrichtung zur Durchflussmengenregulation des Temperierungskreislaufes verbunden ist.

7. System nach wenigstens einem der vorhergehenden Ansprüche, **dadurch gekennzeichnet, dass** die Funktionsschicht (4) als Wärmetauschsystem ausgeführt und ein gut wärmeleitendes Material zur Innenseite des Hauptenergiespeichers (3) eingesetzt ist.

8. System nach wenigstens einem der vorhergehenden Ansprüche, **dadurch gekennzeichnet, dass** sich an der nach innen gerichteten Seite der Außen- oder Tragschicht (5) eine Schutzschicht in Form eines als Gewebe oder Gelege ausgebildeten Faserverbundstoffes befindet.

9. System nach wenigstens einem der vorhergehenden Ansprüche, **dadurch gekennzeichnet, dass** sich auf einer nach außen gerichteten Seite der Funktionsschicht (4) eine aufgebrachte Zwischenschicht aus expandiertem Polystyrol und/oder extrudiertem Polystyrol befindet.

10. System nach wenigstens einem der vorhergehenden Ansprüche, **dadurch gekennzeichnet, dass** die Steuereinheit (6) mit einem Internetportal verbunden ist, welches Werte für den zu erwartenden Außentemperaturverlauf in einer auslesbaren Form kontinuierlich bereitstellt, und die Steuereinheit (6) mit wenigstens einem Ventil (10, 11, 12) in Verbindung steht, welches zwischen einem externen Medienstrom und dem Medienstrom der Funktionsschicht (4) eingebracht ist, wobei sich im externen Medienstrom eine Temperierungseinrichtung befindet.

11. Verfahren zum Betrieb eines Fahrzeugs oder Fahrzeuganhängers mit einem System nach wenigstens einem der vorhergehenden Ansprüche,
**dadurch gekennzeichnet,**
**dass** in der Steuereinheit (6) die Minimal-, Maximal- und Betriebstemperatur des Hauptenergiespeichers (3) hinterlegt sind und ein Temperatursensor (13) am oder im Hauptenergiespeicher (3) dessen Temperatur kontinuierlich erfasst und an die Steuereinheit (6) überträgt und dass bei Unterschreitung einer in der Steuereinheit (6) gespeicherten Minimaltemperatur des Hauptenergiespeichers (3) die Steuereinheit (6) ein Thermostatventil (10) öffnet, welches den Temperierungskreislauf der Antriebseinrichtung und/oder Arbeitseinrichtung (1) mit dem Temperierungskreislauf der Funktionsschicht (4) verbindet und erst mit derart eingestellter Betriebstemperatur des Hauptenergiespeichers (3) wieder schließt.

12. Verfahren nach Anspruch 11, **dadurch gekennzeichnet, dass** die Steuereinheit (6) die Temperatur des Hauptenergiespeichers (3) kontinuierlich in Intervallen von wenigstens fünf Minuten erfasst und mit einer Ausgangstemperatur abgleicht und dann, wenn bei einer wenigstens zweimaligen Gegenüberstellung eine Temperaturdifferenz kleiner ein Kelvin ermittelt wurde, ein Zuheizregime startet, welches eine zusätzliche Einrichtung zur Wärmeerzeugung (9) in Betrieb setzt und deren erzeugter Wärmestrom mit Hilfe eines durch die Steuereinheit (6) betätigten Ventils (12) geöffnet wird, wodurch der so erzeugte Wärmestrom in den Temperaturkreislauf der Funktionsschicht (4) freigegeben wird und das Ventil (12) durch die Steuereinheit (6) dann wieder schließt, wenn die Temperaturmesseinheit (13) das Hauptenergiespeichers (3) die Betriebstemperatur an die Steuereinheit (6) übertragen hat und/oder in der Steuereinheit (6) für Referenztemperaturen des Hauptenergiespeichers (3) Kapazitätsäquivalente in Form von Korrelationswerten Temperatur zu Fahrstrecke hinterlegt sind und die Steuereinheit (6) eine Differenzbildung der auf der Basis der Ist-Energiespeichertemperatur und der Betriebstemperatur als Soll-Energiespeichertemperatur gespeicherten Kapazitätsäquivalente vornimmt und die sich ergebende Änderung der Reichweite oder der Betriebsstunden anzeigt und/oder in Relation mit dem Energieverzehr der Einrichtung zur Wärmeerzeugung in Form eines durchschnittlichen Energiebezuges ausgibt.

13. Verfahren nach Anspruch 11 oder 12, **dadurch gekennzeichnet, dass** die Steuereinheit (6) eine zusätzliche Einrichtung zur Kühlung, wie beispielsweise einen Kältekompressor, in Betrieb setzt, wenn der durch die Temperaturmesseinheit (13) des Hauptenergiespeichers (3) ermittelte Temperaturwert gleich oder größer einer in der Steuereinheit (6) hinterlegten Maximaltemperatur ist und die Steuereinheit (6) ein Ventil (11) öffnet, welches den derart erzeugten Kältestrom zum Durchfluss oder zur Kühlung eines Wärmetauschers (8) des Temperierungskreislaufes der Funktionsschicht (4) freigibt und das Ventil (11) durch die Steuereinheit (6) dann wieder schließt und/oder die Einrichtung zur Kühlung außer Betrieb setzt, wenn die Temperaturmesseinheit (13) des Hauptenergiespeichers (3) die Betriebstemperatur an die Steuereinheit (6) übertragen hat.

14. Verfahren nach wenigstens einem der Ansprüche 11 bis 13, **dadurch gekennzeichnet, dass** die Steuereinheit (6) die Temperatur des Hauptenergiespeichers (3) kontinuierlich ermittelt und bei gleichem oder kleinerem Ist-Temperaturwert im Vergleich zur gespeicherten Minimaltemperatur die Steuereinheit (6) ein Ventil (11) öffnet, welches den Temperierungskreislauf der Funktionsschicht (4) mit dem Temperierungskreislauf eines Zusatzenergiespeichers (7) verbindet und die Steuereinheit (6) das Ventil (11) wieder schließt, wenn die Ist-Temperatur des Hauptenergiespeichers (3) gleich dem Betriebstemperaturwert ist.

15. Verfahren nach wenigstens einem der Ansprüche 11 bis 14, **dadurch gekennzeichnet, dass** die Steuereinheit (6) mit einem Internetportal oder einer ähnlichen Einrichtung verbunden ist und so kontinuierlich zukünftige Temperaturverlaufswerte erfasst und für einen durch einen Bediener vorgegebenen Zeithorizont die auf diesen ermittelten Temperaturverlaufswerten basierende Auskühlungskurve des Hauptenergiespeichers (3) bestimmt, wobei die Auskühlungskurve auf der Grundlage von in der Steuereinheit (6) gespeicherter Temperaturvorgabewerte ermittelt und daraus die einzustehende Temperatur der Funktionsschicht (4) mindestens eines Zusatzenergiespeichers bestimmt wird und mit Hilfe der Öffnung eines Ventils (12) durch die Steuereinheit (6) der Wärmekreislauf einer fahrzeugexternen Energiequelle (9) in den Wärmekreislauf der Funktionsschicht (4) eingebunden wird und erst mit Erreichen der einzustellenden Temperatur der Funktionsschicht (4) die Steuereinheit (6) das Ventil (12) wieder schließt.

## Claims

1. System for the operation of a vehicle or vehicle trailer
with at least one drive unit and/or work unit (1) and at least one main energy storage (3) fixed onboard and/or to the side of a trailer and
at least one control unit (6), which operates the energy exchange according to the respective present load requirement between the drive unit and/or work unit (1) and the main energy storage (3),
wherein
the main energy storage (3) has an energy paneling, which has a cladding element on at least one face,
**characterized in that**
the energy paneling has an outer layer or support layer (5) having on its inside a functional layer (4) of an open-pored or closed-pored metal foam and/or a carrier material with an open applied phase change material or phase change fluid and/or a pipe heat exchanger, comb heat exchanger or plate heat exchanger, wherein the functional layer (4) has at least one plug for the inlet and outlet of a tempering means and wherein in these lines at least one valve (10, 11, 12) for the adjustment of the flow volume of the tempering means is enclosed which is connected to the control unit (6).

2. System of claim 1, **characterized in that** the valve (10) is connected by a media line to a tempering unit (2) of the drive unit and/or work unit (1) and by a media line with a functional layer (4) so that when opening the valve (10), the tempering circuit of the drive unit and/or work unit (1) and the tempering circuit of the functional layer (4) are connected.

3. System of claim 1 or 2, **characterized in that** the valve (12) is connected with an external energy source (9) and/or with an additional energy storage (7) connected to a control unit (6) by one media line each.

4. System of the claims 2 and 3, **characterized in that** the valve (10) and the additional energy storage (7) are connected by one media line each with a valve (11) which is connected with a control unit (6) by a signal line and with a heat exchanger (8) by a media line.

5. System of at least one of the preceding claims, **characterized in that** the functional layer (4) has a material combination comprising metal foam with an applied foil of fiber compound material and/or a metal foam soaked with a phase change material or phase change fluid and/or an adsorptive or absorptive material integrated into the fiber compound material or between two plates of metal or plastic, and/or a pipe system and/or a labyrinth system is applied, which is in connection with a device for heat storage and/or heat conversion and/or spaces of the functional layer (4) are coated with a material for latent heat storage.

6. System of at least one of the preceding claims, **characterized in that** the functional layer (4) is integrated into the tempering circuit, whose temperature is conditioned by the control unit (6), which is in connection with a temperature sensor (13), which determines continuously the temperature of the main energy storage (3), and the control unit (6) is further connected to a device for flow volume regulation of the tempering circuit.

7. System of at least one of the preceding claims, **characterized in that** the functional layer (4) is formed as heat exchange system and a good heat conductive material for the inner side of the main energy storage (3) is used.

8. System of at least one of the preceding claims, **characterized in that** on the outer layer or support layer (5) directed towards the inside is a protective layer as a fabric or as a laid fiber compound material being formed.

9. System of at least one of the preceding claims, **characterized in that** on the side of the functional layer (4) directed towards the outside is an applied interlayer of expanded polystyrene and/or extruded polystyrene.

10. System of at least one of the preceding claims, **characterized in that** the control unit (6) is connected to an internet portal, which provides continuously values for the expected outdoor temperature curve in a readable form, and the control unit (6) being in connection with at least one valve (10, 11, 12), which is provided between an external media stream and the media stream of the functional layer (4), wherein a tempering unit is provided in the external media stream.

11. Method for the operation of a vehicle or vehicle trailer with a system of at least one of the preceding claims
**characterized in that**
in the control unit (6) the minimal, maximal, and operating temperature of the main energy storage (3) are stored and a temperature sensor (13) at or in the main energy storage (3) determines continuously its temperature and transmits same to the control unit (6) and when falling below the minimal temperature of the main energy storage (3) stored in the control unit (6), the control unit (6) opens a thermostatic valve (10), which connects the tempering circuit of the drive unit and/or work unit (1) with the tempering circuit of the functional layer (4) and only closes with that set operating temperature of the main energy storage (3).

12. Process of claim 11, **characterized in that** the control unit (6) determines continuously the temperature of the main energy storage (3) in intervals of at least five minutes and compares it to a starting temperature, and if at least two comparisons have determined a temperature difference smaller than one Kelvin, a heating system starts, which operates an additional device for heat production (9) and whose produced heat flow is opened with the help of a valve (12) operated by the control unit (6), whereby the heat flow generated in this way is released into the tempering circuit of the functional layer (4), and the valve (12) is closed again by the control unit (6), when the temperature measurement unit (13) of the main energy storage (3) has transmitted the operating temperature to the control unit (6) and/or in the control unit (6) for reference temperatures of the main energy storage (3) capacity equivalents in form of correlation values of temperature to driving distance are stored, and the control unit (6) determines a difference on basis of the actual energy storage temperature and the operating temperature as nominal energy storage temperature stored capacity equivalents and displays the resulting change in the range or the operating hours and/or displays in relation to the energy absorption of the device for heat production in form of an average energy consumption.

13. Process of claim 11 or 12, **characterized in that** the control unit (6) operates an additional device for cooling, for instance, a cooling compressor, when the temperature value determined by the temperature measurement unit (13) of the main energy storage (3) is equal to or larger than a maximal temperature stored in the control unit (6), and the control unit (6) opens a valve (11), which releases a cooling flow thus generated for the flow or the cooling of a heat exchanger (8) of the tempering circuit of the functional layer (4) and closes the valve (11) operated by the control unit (6) again and/or stops operation of the device for cooling when the temperature measurement unit (13) of the main energy storage (3) has transmitted the operating temperature to the control unit (6).

14. Process of at least one of the claims 11 to 13, **characterized in that** the control unit (6) determines continuously the temperature of the main energy storage (3) and with the same or smaller actual temperature value in comparison to the stored minimal temperature, the control unit (6) opens a valve (11), which connects the tempering circuit of the functional layer (4) with the tempering circuit of an additional energy storage (7), and the control unit (6) closes the valve (11) again when the actual temperature of the main energy storage (3) is equal to the operating temperature value.

15. Process of at least one of the claims 11 to 14, **characterized in that** the control unit (6) is connected to an internet portal or a similar configuration and determines that way future temperature curve values and the cooling curve based on these measured temperature curve values of the main energy storage (3) within a timeframe given by an operator, wherein the cooling curve is determined on basis of the temperature default values stored in the control unit (6) and from that the temperature to adjust of the functional layer (4) of at least one additional energy storage is determined and with the help of opening a valve (12) by the control unit (6), the heat circuit of an off-board energy source (9) is integrated into the heat circuit of the functional layer (4) and only with reaching the temperature to adjust of the functional layer (4), the control unit (6) closes the valve (12) again.

## Revendications

1. Système destiné au fonctionnement d'un véhicule ou d'une remorque de véhicule avec au moins un dispositif d'entraînement et/ou un dispositif de travail (1), ainsi qu'au moins un accumulateur d'énergie principal (3) fixé sur le véhicule et/ou sur la remorque et
au moins une unité de commande (6) qui régule l'échange d'énergie en fonction de l'exigence respective de la charge existante entre le dispositif d'entraînement et/ou le dispositif de travail (1) et l'accumulateur d'énergie principal (3),
l'accumulateur d'énergie principal (3) présentant un habillage pour un accumulateur d'énergie, lequel comprend un élément d'habillage sur au moins une surface,
**caractérisé en ce que**,
l'habillage pour un accumulateur d'énergie présente une couche extérieure ou de support (5), sur la face intérieure de laquelle se raccorde une couche fonctionnelle (4) étant constituée d'une mousse métallique à pores ouverts ou fermés et/ou d'un matériau de support contenant un matériau intégré à changement de phase ou un fluide intégré à changement de phase et/ou d'un échangeur de chaleur à conduits, à alvéoles ou à plaques,
la couche fonctionnelle (4) disposant respectivement d'au moins un raccordement pour amener et évacuer un milieu thermorégulateur, au moins une soupape (10, 11, 12) servant à réguler le débit du milieu thermorégulateur étant intégrée dans ces conduits, laquelle se trouve en liaison avec l'unité de commande (6).

2. Système selon la revendication 1, **caractérisé en ce que** la soupape (10) se trouve en liaison avec une unité thermorégulatrice (2) du dispositif d'entraînement et/ou du dispositif de travail (1) par l'intermédiaire d'un conduit de média et avec la couche fonctionnelle (4) par l'intermédiaire d'un conduit de média, de sorte que le circuit de thermorégulation du dispositif d'entraînement et/ou du dispositif de travail (1) et le circuit de thermorégulation de la couche fonctionnelle (4) sont reliés lors de l'ouverture de la soupape (10).

3. Système selon la revendication 1 ou 2, **caractérisé en ce que** la soupape (12) est reliée, respectivement par l'intermédiaire d'un conduit de média, à une source d'énergie externe (9) et/ou à un accumulateur d'énergie supplémentaire (7) relié à l'unité de commande (6).

4. Système selon les revendications 2 et 3, **caractérisé en ce que** la soupape (10) et l'accumulateur d'énergie supplémentaire (7) sont reliés à une soupape (11), respectivement par l'intermédiaire d'un conduit de média, laquelle est reliée à l'unité de commande (6) par l'intermédiaire d'une ligne de signaux et à un échangeur de chaleur (8) par l'intermédiaire d'un conduit de média.

5. Système selon au moins l'une des revendications précédentes, **caractérisé en ce que** la couche fonctionnelle (4) présente un mélange de matériaux, comprenant une mousse métallique avec un film appliqué en matériau composite renforcé de fibres et/ou une mousse métallique enduite d'un matériau à changement de phase ou d'un fluide à changement de phase et/ou un matériau par adsorption ou par absorption intégré dans le matériau composite renforcé de fibres ou entre deux plaques en métal ou en plastique, et/ou un système à conduit et/ou un système à labyrinthe sont mis en place, lesquels sont en relation avec un dispositif destiné à l'accumulation de la chaleur et/ou à la conversion de la chaleur et/ou des interstices de la couche fonctionnelle (4) sont revêtus d'un matériau destiné à l'accumulation de chaleur latente.

6. Système selon au moins l'une des revendications précédentes, **caractérisé en ce que** la couche fonctionnelle (4) est intégrée dans un circuit de thermorégulation, dont la température est conditionnée par l'unité de commande (6), laquelle est reliée à une sonde de température (13), lequel calcule en continu la température de l'accumulateur d'énergie principal (3), et l'unité de commande (6) est en outre reliée à un dispositif destiné à la régulation du débit du circuit de thermorégulation.

7. Système selon au moins l'une des revendications précédentes, **caractérisé en ce que** la couche fonctionnelle (4) est conçue comme un système d'échange de chaleur et un matériau bon conducteur de chaleur est mis en place sur la face intérieure de l'accumulateur d'énergie principal (3).

8. Système selon au moins l'une des revendications précédentes, **caractérisé en ce qu'**au niveau de la face tournée vers l'intérieur de la couche extérieure ou de support (5) se trouve une couche de protection sous la forme d'un matériau en fibres composites conçu comme un tissu ou une natte.

9. Système selon au moins l'une des revendications précédentes, **caractérisé en ce qu'**une couche intermédiaire appliquée en polystyrène expansé et/ou en polystyrène extrudé se trouve sur une face tournée vers l'extérieure de la couche fonctionnelle (4).

10. Système selon au moins l'une des revendications précédentes, **caractérisé en ce que** l'unité de commande (6) est connectée à un portail Internet, lequel fournit en continu sous une forme lisible des valeurs pour les variations prévues de la température extérieure, et l'unité de commande (6) est en relation avec au moins une soupape (10, 11, 12), laquelle est mise en place entre un flux de média externe et le flux de média de la couche fonctionnelle (4), un dispositif de thermorégulation se trouvant dans le flux de média externe.

11. Procédé destiné au fonctionnement d'un véhicule ou d'une remorque de véhicule avec un système selon au moins l'une des revendications précédentes,
**caractérisé en ce que**,
les températures minimale, maximale et de service de l'accumulateur d'énergie principal (3) sont enregistrées dans l'unité de commande (6) et une sonde de température (13), située sur ou dans l'accumulateur d'énergie principal (3), saisit en continu la température de ce dernier et la transmet à l'unité de commande (6), et **en ce que**, dans le cas d'un dépassement d'une température minimale de l'accumulateur d'énergie principal (3) enregistrée dans l'unité de commande (6), l'unité de commande (6) ouvre une soupape thermostatique (10), laquelle relie le circuit de thermorégulation du dispositif d'entraînement et/ou du dispositif de travail (1) au circuit de thermorégulation de la couche fonctionnelle (4), et ne la referme que lorsque la température de service ainsi préréglée de l'accumulateur d'énergie principal (3) est atteinte.

12. Procédé selon la revendication 11, **caractérisé en ce que** l'unité de commande (6) saisit en continu la température de l'accumulateur d'énergie principal (3) par intervalles d'au moins cinq minutes et la compense avec une température initiale et puis, si une variation de température inférieure à un degré Kelvin a été calculée lors d'au moins une double comparaison, démarre un régime de chauffe, lequel met en route un dispositif supplémentaire destiné à la génération de chaleur (9) et dont le flux de chaleur généré est ouvert au moyen d'une soupape (12) actionnée par l'intermédiaire de l'unité de commande (6), le flux de chaleur ainsi généré étant libéré dans le circuit de température de la couche fonctionnelle (4) et la soupape (12) étant refermée par l'intermédiaire de l'unité de commande (6) dès lors que l'unité de mesure de la température (13) de l'accumulateur d'énergie principal (3) a transmis la température de service à l'unité de commande (6) et/ou des équivalents de capacité, sous la forme de valeurs de corrélation de la température pour l'itinéraire de conduite, sont enregistrés dans l'unité de commande (6) pour des températures de référence de l'accumulateur d'énergie principal (3) et l'unité de commande (6) procède à une différentiation des équivalents de capacité enregistrés comme la température nominale de l'accumulateur d'énergie sur la base de la température effective de l'accumulateur d'énergie et de la température de service, et affiche la fluctuation en résultant de l'autonomie ou des heures de service et/ou la retransmet en relation avec la consommation d'énergie du dispositif destiné à la génération de chaleur sous la forme d'une consommation moyenne d'énergie.

13. Procédé selon la revendication 11 ou 12, **caractérisé en ce que** l'unité de commande (6) met en route un dispositif supplémentaire destiné au refroidissement, comme par exemple un compresseur frigorifique, lorsque la valeur de la température, calculée par l'intermédiaire de l'unité de mesure de la température (13) de l'accumulateur d'énergie principal (3), est supérieure ou égale à une température maximale enregistrée dans l'unité de commande (6) et l'unité de commande (6) ouvre une soupape (11), laquelle libère le flux réfrigérant ainsi généré, destiné au passage ou au refroidissement d'un échangeur de chaleur (8) du circuit de thermorégulation de la couche fonctionnelle (4) et l'unité de commande (6) referme alors de nouveau la soupape (11) et/ou met hors circuit le dispositif destiné au refroidissement, lorsque l'unité de mesure de la température (13) de l'accumulateur d'énergie principal (3) a transmis la température de service à l'unité de commande (6).

14. Procédé selon au moins l'une des revendications 11 bis 13, **caractérisé en ce que** l'unité de commande (6) calcule en continu la température de l'accumulateur d'énergie principal (3) et, en cas d'une valeur effective de la température égale ou inférieure par rapport à la température minimale enregistrée, l'unité de commande (6) ouvre une soupape (11), laquelle relie le circuit de thermorégulation de la couche fonctionnelle (4) au circuit de thermorégulation d'un accumulateur d'énergie supplémentaire (7) et l'unité de commande (6) referme de nouveau la soupape (11) lorsque la température effective de l'accumulateur d'énergie principal (3) est égale à la valeur de la température de service.

15. Procédé selon au moins l'une des revendications 11 bis 14, **caractérisé en ce que** l'unité de commande (6) est connectée à un portail Internet ou à un dispositif similaire et saisit ainsi en continu des futures valeurs de variation de la température et détermine, pour un horizon temporel préalablement défini par un utilisateur, la courbe de refroidissement de l'accumulateur d'énergie principal (3) reposant sur ces valeurs calculées de variation de la température, la courbe de refroidissement étant calculée sur la base des valeurs de consigne de la température enregistrées dans l'unité de commande (6) et la température de régulation de la couche fonctionnelle (4) d'au moins un accumulateur d'énergie supplémentaire étant déterminée à partir de là et le circuit de chaleur d'une source d'énergie externe (9) au véhicule est intégré dans le circuit de chaleur de la couche fonctionnelle (4) à l'aide de l'ouverture d' une soupape (12) par l'intermédiaire de l'unité de commande (6) et l'unité de commande (6) ne referme la soupape (12) que lorsque la température de régulation de la couche fonctionnelle (4) est atteinte.
